# EUROPEAN PATENT SPECIFICATION

(11) **EP 4 285 166 B1**
(45) Date of publication and mention of the grant of the patent: **15.04.2026**
(21) Application number: 22746818.8
(22) Date of filing: 31.01.2022
(51) Int. Cl.: G02B 1/12, G02B 1/00, C23C 28/04

(54) **TRANSITION METAL DICHALCOGENIDE COATED FLAT OPTICAL DEVICES HAVING SILICON-CONTAINING OPTICAL DEVICE STRUCTURES**
ÜBERGANGSMETALLDICHALKOGENIDBESCHICHTETE FLACHE OPTISCHE VORRICHTUNGEN MIT SILIZIUMHALTIGEN OPTISCHEN VORRICHTUNGSSTRUKTUREN
DISPOSITIFS OPTIQUES PLATS REVÊTUS DE DICHALCOGÉNURE DE MÉTAL DE TRANSITION AYANT DES STRUCTURES DE DISPOSITIF OPTIQUE CONTENANT DU SILICIUM

(30) Priority: 01.02.2021 US 202163144182 P
(43) Date of publication of application: 06.12.2023
(73) Proprietor: Applied Materials, Inc., Santa Clara, California 95054 (US)
(72) Inventor: TEO, Russell Chin Yee, Santa Clara, California 95054 (US); CONNOLLY, James, Santa Clara, California 95054 (US); CHEN, Chien-An, Santa Clara, California 95054 (US); CEBALLOS, Andrew, Palo Alto, California 94306 (US); JIANG, Jing, Santa Clara, California 95054 (US); YANG, Jhenghan, Santa Clara, California 95054 (US); XU, Yongan, Santa Clara, California 95054 (US)
(74) Representative: Zimmermann & Partner Patentanwälte mbB
(86) International application number: PCT/US2022/014593
(87) International publication number: WO 2022/165356

(56) References cited:
- WO-A1-2020/046563
- KR-A- 20170 069 161
- KR-A- 20180 058 647
- KR-A- 20200 076 258
- US-A1- 2019 033 683
- US-A1- 2020 083 037
- CHANG-HUA LIU ET AL: "Ultrathin van der Waals metalenses", ARXIV.ORG, CORNELL UNIVERSITY LIBRARY, 201 OLIN LIBRARY CORNELL UNIVERSITY ITHACA, NY 14853, 10 July 2018 (2018-07-10), XP081112790, DOI: 10.1021/ACS.NANOLETT.8B02875
- YANG XIANGUANG ET AL: "Monolayer MoS 2 for nanoscale photonics", NANOPHOTONICS, vol. 9, no. 7, 3 February 2020 (2020-02-03), DE, pages 1557 - 1577, XP093222604, ISSN: 2192-8606, DOI: 10.1515/nanoph-2019-0533
- HONG XUANMIAO, HU GUANGWEI, ZHAO WENCHAO, WANG KAI, SUN SHANG, ZHU RUI, WU JING, LIU WEIWEI, LOH KIAN PING, WEE ANDREW THYE SHEN, : "Structuring Nonlinear Wavefront Emitted from Monolayer Transition-Metal Dichalcogenides", RESEARCH, vol. 2020, 5 April 2020 (2020-04-05), pages 1 - 10, XP055955046, DOI: 10.34133/2020/9085782

## Description

### BACKGROUND

### Field

Embodiments of the present disclosure generally relate to flat optical devices. More specifically, embodiments described herein relate to flat optical devices with a coating layer including monolayers selected from the group consisting of molybdenum disulfide (MoS₂), tungsten disulfide (WS₂), tungsten diselenide (WSe₂), molybdenum diselenide (MoSe₂), molybdenum ditelluride (MoTe₂), titanium disulfide (TiS₂), zirconium disulfide (ZrS₂), zirconium diselenide (ZrSe₂), hafnium disulfide (HfS₂), platinum disulfide (PtS₂), tin disulfide (SnS₂), or combinations thereof.

### Description of the Related Art

Flat optical devices include arrangements of optical device structures with in-plane dimensions smaller than half a design wavelength of light, and an out-of-plane dimension of the order of or larger than the design wavelength. For example, optical device structures may have sub-micron dimensions, e.g., nanosized dimensions. Flat optical devices, such as metasurfaces, may consist of a single layer, or multiple layers of optical device structures. Chang-Hua Liu et al. describe ultrathin and flat optical lenses in their paper "Ultrathin van der Waals metalenses". CHANG-HUA LIU ET AL: "Ultrathin van der Waals metalenses",ARXIV.ORG, CORNELL UNIVERSITY LIBRARY, 201 OLIN LIBRARY CORNELL UNIVERSITY ITHACA, NY 14853, 10 July 2018 (2018-07-10).

Applying a coating to the optical device structures may allow the absorption and refraction of light. For example, semiconductor materials, such as germanium (Ge) are capable of absorbing and refracting light. However, these materials are difficult to integrate with the optical device structures of the flat optical device due to poor etch-selectivity and cross-contamination. Also, other materials, such as graphene, do not possess a bandgap and the light absorbing abilities are affected by changes in Fermi energy levels. Therefore, what is needed in the art are improved optical device structures and coatings therefor. Xianguang Yang et al. describe monolayers of MoS2 in their paper "Monolayer MoS2 for nanoscale photonics". NANOPHOTONICS, vol. 9, no. 7, 3 February 2020 (2020-02-03), pages 1557-1577.

### SUMMARY

In one embodiment, a device is provided. The device includes a flat optical device. The flat optical device is operable to focus light incident on the flat optical device. The flat optical device includes a plurality of optical device structures disposed in or on an upper surface of a substrate. The flat optical device further includes a coating layer disposed over each optical device structure of the plurality of optical device structures. The coating layer includes one or more monolayers. Each monolayer of the one or more monolayers has a composition selected from the group consisting of molybdenum disulfide (MoS₂), tungsten disulfide (WS₂), tungsten diselenide (WSe₂), molybdenum diselenide (MoSe₂), molybdenum ditelluride (MoTe₂), titanium disulfide (TiS₂), zirconium disulfide (ZrS₂), zirconium diselenide (ZrSe₂), hafnium disulfide (HfS₂), platinum disulfide (PtS₂), tin disulfide (SnS₂), or combinations thereof.

In another embodiment, a device is provided. The device includes a flat optical device. The flat optical device is operable to focus light incident on the flat optical device. The flat optical device is a metasurface. The flat optical device includes a plurality of optical device structures disposed in or on an upper surface of a substrate. The plurality of optical device structures have a critical dimension less than 1 micron. The flat optical device further includes a coating layer disposed over each optical device structure of the plurality of optical device structures. The coating layer includes one or more monolayers. Each monolayer of the one or more monolayers has a composition selected from the group consisting of molybdenum disulfide (MoS₂), tungsten disulfide (WS₂), tungsten diselenide (WSe₂), molybdenum diselenide (MoSe₂), molybdenum ditelluride (MoTe₂), titanium disulfide (TiS₂), zirconium disulfide (ZrS₂), zirconium diselenide (ZrSe₂), hafnium disulfide (HfS₂), platinum disulfide (PtS₂), tin disulfide (SnS₂), or combinations thereof.

In another embodiment, a device is provided. The device includes a camera. The device includes a flat optical device. The flat optical device is operable to focus light incident on the flat optical device to the camera. The flat optical device is a metasurface. The flat optical device includes a plurality of optical device structures disposed in or on an upper surface of a substrate. The flat optical device further includes a coating layer disposed over each optical device structure of the plurality of optical device structures. The coating layer includes one or more monolayers. Each monolayer of the one or more monolayers has a composition selected from the group consisting of molybdenum disulfide (MoS₂), tungsten disulfide (WS₂), tungsten diselenide (WSe₂), molybdenum diselenide (MoSe₂), molybdenum ditelluride (MoTe₂), titanium disulfide (TiS₂), zirconium disulfide (ZrS₂), zirconium diselenide (ZrSe₂), hafnium disulfide (HfS₂), platinum disulfide (PtS₂), tin disulfide (SnS₂), or combinations thereof.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only exemplary embodiments and are therefore not to be considered limiting of its scope, and may admit to other equally effective embodiments.
Figure 1A is a schematic, front view of a device according to embodiments.
Figure 1B is a schematic, top view of a flat optical device having one or more optical device structures according to embodiments.
Figure 1C is a schematic, cross-sectional view of a flat optical device having one or more optical device structures according to embodiments.
Figures 2A-2E are schematic, perspective views of a unit cell of a flat optical device having a coating layer disposed thereon according to embodiments.
Figure 3 is a schematic, cross-sectional view of a coating layer according to embodiments.
Figure 4 is a flow diagram of a method of forming a flat optical device having one or more unit cells, as shown in Figures 2A-2E according to embodiments.

To facilitate understanding, identical reference numerals have been used, where possible, to designate identical elements that are common to the figures. It is contemplated that elements and features of one embodiment may be beneficially incorporated in other embodiments without further recitation.

### DETAILED DESCRIPTION

Embodiments of the present disclosure generally relate to flat optical devices. More specifically, embodiments described herein relate to flat optical devices with a coating layer including monolayers selected from the group consisting of molybdenum disulfide (MoS₂), tungsten disulfide (WS₂), tungsten diselenide (WSe₂), molybdenum diselenide (MoSe₂), molybdenum ditelluride (MoTe₂), titanium disulfide (TiS₂), zirconium disulfide (ZrS₂), zirconium diselenide (ZrSe₂), hafnium disulfide (HfS₂), platinum disulfide (PtS₂), tin disulfide (SnS₂), or combinations thereof. In one embodiment, a flat optical device is provided. The flat optical device includes a plurality of optical device structures disposed in or on an upper surface of a substrate. The flat optical device further includes a coating layer disposed over each optical device structure of the plurality of optical device structures. The coating layer includes one or more monolayers.

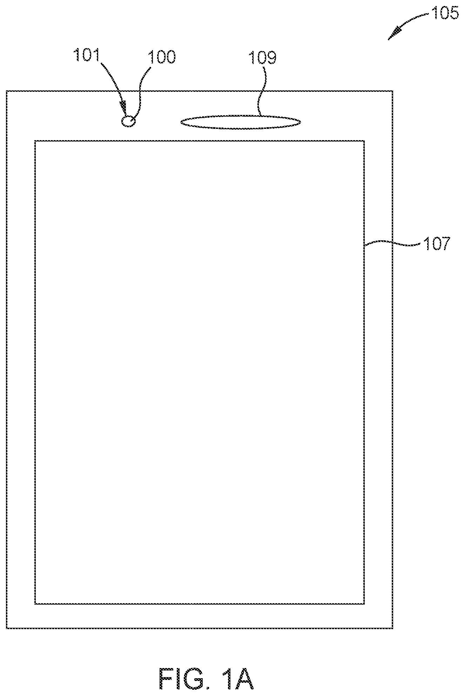

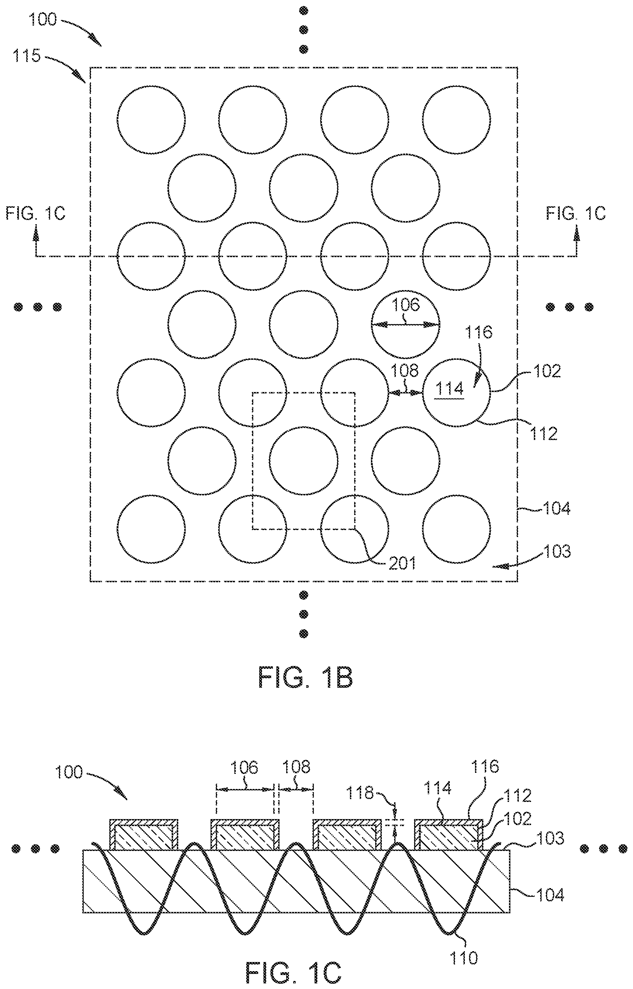

Figure 1A is a schematic, front view of a device 105 according to embodiments. The device 105 may be a mobile phone (e.g., a smartphone). In this embodiment, the device 105 includes a front-facing camera 101, a speaker 109, and a display 107. The front-facing camera 101 includes a flat optical device 100. In one embodiment, which can be combined with other embodiments described herein, the flat optical device 100 is a metasurface. The flat optical device 100 of the front-facing camera 101 is configured to operate as a bio-authentication or facial recognition sensor. The flat optical device 100 includes a plurality of optical device structures (shown in Figures 1B and 1C) that are operable to focus light incident on the flat optical device 100 to the front-facing camera 101.

Figure 1B is a schematic, top view, and Figure 1C is a schematic, cross-sectional view of a portion 115 of a flat optical device 100 having one or more optical device structures 102 according to embodiments described herein. In one embodiment, which can be combined with other embodiments described herein, the flat optical device 100 is a flat optical device, such as a metasurface.

Embodiments described herein provide for the flat optical device 100 to include a plurality of optical device structures 102 disposed in or on an upper surface 103 of a substrate 104. The plurality of optical device structures 102 are nanostructures, having sub-micron dimensions, e.g., nano-sized dimensions. The plurality of optical device structures 102 include sidewalls 112 and a top surface 114. The plurality of optical device structures 102 have critical dimensions 106, e.g., one of the width or the diameter of the optical device structures 102. In one embodiment, which may be combined with other embodiments described herein, the critical dimension 106 is less than 1 micrometer (µm) and corresponds to the width or the diameter of the optical device structures 102, depending on the cross-section of the optical device structures 102. In another embodiment, which may be combined with other embodiments described herein, the critical dimensions 106 are about 100 nanometers (nm) to about 1000 nm.

While Figures 1B and 1C depict the optical device structures 102 as circular cross-sections, the cross-sections of the optical device structures 102 may have other shapes including, but not limited to, rectangular, triangular, elliptical, regular polygonal, irregular polygonal, or irregular shaped cross-sections. In some embodiments, which can be combined with other embodiments described herein, the cross-sections of the optical device structures 102 of the flat optical device 100 have different shaped cross-sections. In other embodiments, which can be combined with other embodiments described herein, the cross-sections of the optical device structures 102 of the flat optical device 100 have cross-sections with substantially the same shape. In some embodiments, which can be combined with other embodiments described herein, at least one of the critical dimensions 106 of an optical device structure 102 may be different from the other critical dimensions 106 of the optical device structures 102. In other embodiments, which can be combined with other embodiments described herein, the critical dimensions 106 of the optical device structure 102 are the same.

Gaps 108 are disposed between each of the optical device structures 102. In some embodiments, which can be combined with other embodiments described herein, one or more gaps 108 surrounding an optical device structure 102 are equal to or substantially equal to one or more other gaps 108 surrounding another optical device structure 102. In some embodiments, which can be combined with other embodiments described herein, one or more of the gaps 108 surrounding an optical device structure 102 are different from one or more other gaps 108 surrounding another optical device structure 102.

The substrate 104 may be formed from any suitable material, provided that the substrate 104 can adequately transmit light in a desired wavelength or wavelength range and can serve as an adequate support for the flat optical device 100 described herein. Substrate selection may include substrates of any suitable material, including, but not limited to, amorphous dielectrics, non-amorphous dielectrics, crystalline dielectrics, silicon oxide, polymers, and combinations thereof. In some embodiments, which may be combined with other embodiments described herein, the substrate 104 includes a transparent material. Suitable examples may include an oxide, sulfide, phosphide, telluride or combinations thereof. In one example, the substrate 104 includes silicon (Si), silicon dioxide (SiO₂), germanium (Ge), silicon germanium (SiGe), InP, GaAs, GaN, fused silica, quartz, sapphire, and high-index transparent materials such as high-refractive-index glass.

In one embodiment, which may be combined with other embodiments described herein, the material of the optical device structures 102 includes nonconductive materials, such as dielectric materials. The dielectric materials may include amorphous dielectrics and crystalline dielectrics. Examples of the dielectric materials include, but are not limited to, silicon-containing materials, such as silicon (Si), silicon nitride (Si₃N₄), silicon oxynitrides, and silicon dioxide (SiO₂). In one embodiment, which can be combined with other embodiments described herein, the optical device structures 102 may be formed nanoimprint lithography (NIL), and combinations thereof. The optical device structures 102 including the silicon-containing materials are transparent.

A coating layer 116 is disposed over the plurality of optical device structures 102. In one embodiment, which can be combined with other embodiments described herein, the coating layer 116 is conformal to the plurality of optical device structures 102. In another embodiment, which can be combined with other embodiments described herein, the coating layer 116 is non-conformal to the plurality of optical device structures 102. The coating layer 116 includes a layer thickness 118. The layer thickness 118 is between about 0.5 nm to about 75 nm. For example, the layer thickness 118 is between about 5.5 nm to about 70 nm, between about 10.5 nm to about 65 nm, between about 15.5 nm to about 60 nm, between about 20.5 nm to about 55 nm, between about 25.5 nm to about 50 nm, between about 30.5 nm to about 45 nm, and between about 35.5 nm to about 40 nm. The coating layer 116 improves the photon emission efficiency, thus reducing the critical dimensions 106 and thickness of the flat optical device 100. This will help reduce the physical footprint of the flat optical device 100. The photon emission efficiency is improved due to the coating layer 116 having multiple, high indirect band gaps. The high indirect band gaps allow for light-absorbing ability, which is unaffected by changes in Fermi energy levels.

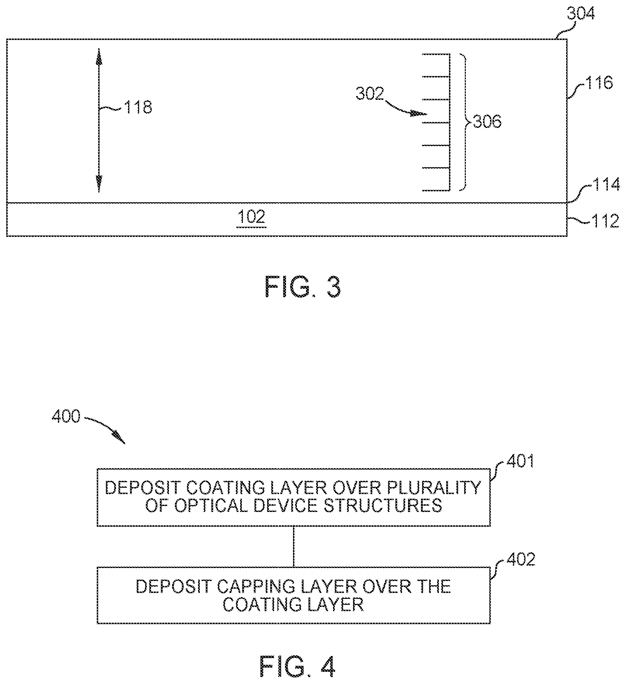

The coating layer 116 includes a range of monolayers 306, as shown in Figure 3. The range of monolayers 306 are transition metal dichalcogenide (TMD) monolayers. The coating layer 116 has a composition selected from the group consisting of molybdenum disulfide (MoS₂), tungsten disulfide (WS₂), tungsten diselenide (WSe₂), molybdenum diselenide (MoSe₂), molybdenum ditelluride (MoTe₂), titanium disulfide (TiS₂), zirconium disulfide (ZrS₂), zirconium diselenide (ZrSe₂), hafnium disulfide (HfS₂), platinum disulfide (PtS₂), tin disulfide (SnS₂), or combinations thereof. The coating layer 116 has one of a single-crystalline lattice, a polycrystalline lattice, or an amorphous lattice. The single-crystalline lattice, the polycrystalline lattice, or the amorphous lattice may be provided by one or more of a chemical vapor deposition (CVD), flowable CVD (FCVD), physical vapor deposition (PVD), atomic layer deposition (ALD), multi-beam-epitaxy (MBE), ion-beam-assisted-deposition (IBAD), epitaxy, spin-on-glass (SoG), ion beam deposition (IBD), or spin-on-coat (SoC) processes.

As shown in Figure 1C, a light beam 110 is incident on the flat optical device 100. The gaps 108 between each adjacent optical device structure 102 allows the light beam 110 to propagate through the substrate 104, the gaps 108, and the optical device structures 102, as the substrate 104, the gaps 108, and the optical device structures 102 are transparent. The substrate 104, the gaps 108, and the optical device structures 102 refract the light beam 110, changing the speed the light beam 110 travels as well as the direction the light beam 110 travels.

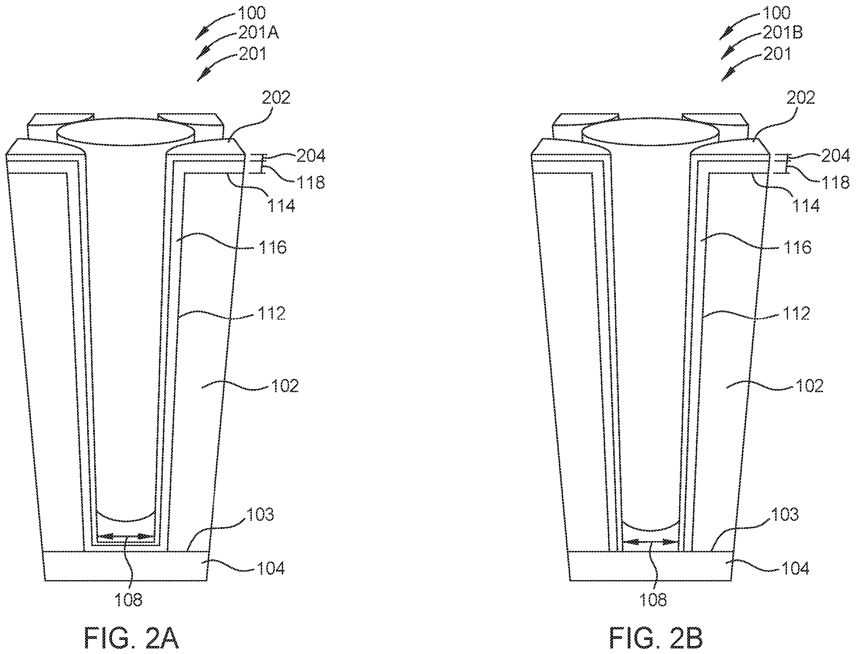

Figures 2A-2E are schematic, perspective views of configurations 201A-201E of a unit cell 201 of the flat optical device 100. In one embodiment, which can be combined with other embodiments described herein, the unit cell 201 may correspond to a portion or a whole surface of the substrate 104 of the flat optical device 100.

Each of the configurations 201A-201E of the unit cell 201 may include a capping layer 202 disposed over the coating layer 116. The capping layer 202 includes at least one of aluminum oxide (Al₂O₃), titanium oxide (TiO), tantalum oxide (TaO), silicon nitride (Si₃N₄), silicon dioxide (SiO₂), titanium nitride (TiN), titanium dioxide (TiO₂), silicon oxycarbide (SiOC), silicon carbide (SiC), or combinations thereof. The capping layer 202 can also include low-k, extreme low-k, and ultralow-k dielectric materials such as SiCONH, SiCOH, or combinations thereof. The capping layer 202 includes a capping layer thickness 204. The capping layer thickness 204 is between about 1 nm to about 60 nm. For example, the capping layer thickness 204 is between about 5 nm to about 55 nm, between about 10 nm to about 55 nm, between about 15 nm to about 50 nm, between about 20 nm to about 45 nm, between about 25 nm to about 40 nm, and between about 30 nm to about 35 nm. The capping layer 202 protects the coating layer 116 from being corroded or degraded during patterning processes and/or during use of the flat optical device 100. Further, the capping layer 202 confines the coating layer 116 to the optical device structures 102. The capping layer 202 may serve as an etch stop layer during patterning processes. Additionally, the capping layer 202 will help in patterning end point detection during patterning of the optical device structures 102.

As shown in Figure 2A, the first configuration 201A of the unit cell 201 has the coating layer 116 disposed over an upper surface 103 of the substrate 104, sidewalls 112 of the plurality of optical device structures 102, and a top surface 114 of the plurality of optical device structures 102. The capping layer 202 is disposed over the coating layer 116.

As shown in Figure 2B, the second configuration 201B of the unit cell 201 has the coating layer 116 disposed on the sidewalls 112 of the plurality of optical device structures 102, and the top surface 114 of the plurality of optical device structures 102. The capping layer 202 is disposed on the sidewalls 112 of the plurality of optical device structures 102, and the top surface 114 of the plurality of optical device structures 102. The upper surface 103 of the substrate 104 is exposed. In one embodiment, which can be combined with other embodiments described herein, the coating layer 116 and the capping layer 202 can be selectively deposited over the sidewalls 112 of plurality of optical device structures 102 and the top surface 114 of the plurality of optical device structures 102. In another embodiment, which can be combined with other embodiments described herein, the coating layer 116 and the capping layer 202 disposed on the upper surface 103 of the substrate 104 can be etched.

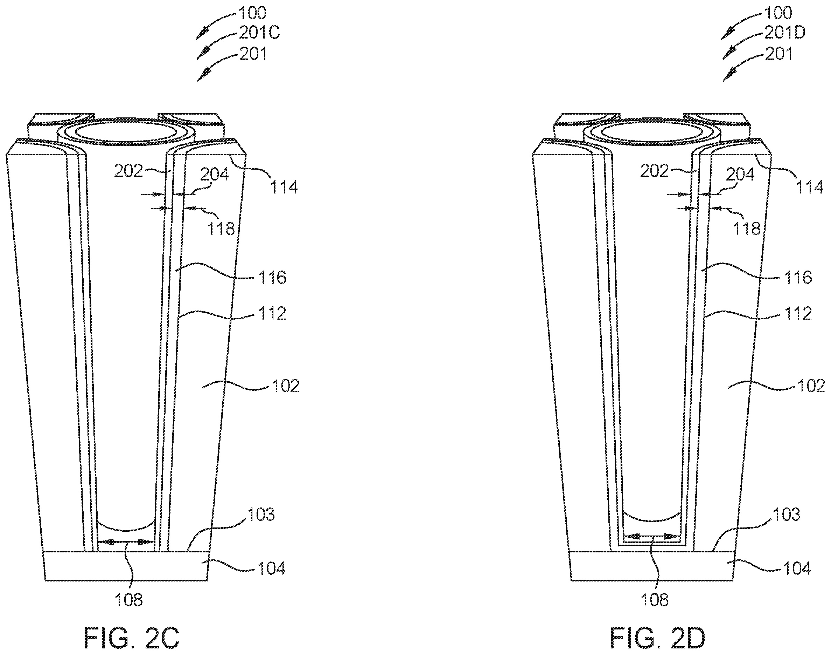

As shown in Figure 2C, the third configuration 201C of the unit cell 201 has the coating layer 116 disposed on the sidewalls 112 of the plurality of optical device structures 102. The capping layer 202 is disposed on the sidewalls 112 of the plurality of optical device structures 102. The upper surface 103 of the substrate 104 is exposed. The top surface 114 of each optical device structure 102 of the plurality of optical device structures 102 is exposed. In one embodiment, which can be combined with other embodiments described herein, the coating layer 116 and the capping layer 202 can be selectively deposited over the sidewalls 112 of plurality of optical device structures 102. In another embodiment, which can be combined with other embodiments described herein, the coating layer 116 and the capping layer 202 disposed on the upper surface 103 of the substrate 104 and the top surface 114 of the plurality of optical device structures 102 can be etched.

As shown in Figure 2D, the fourth configuration 201D of the unit cell 201 has the coating layer 116 disposed on the sidewalls 112 of the plurality of optical device structures 102 and the upper surface 103 of the substrate 104. The capping layer 202 is disposed on the sidewalls 112 of the plurality of optical device structures 102 and the upper surface 103 of the substrate 104. The top surface 114 of each optical device structure 102 of the plurality of optical device structures 102 is exposed. In one embodiment, which can be combined with other embodiments described herein, the coating layer 116 and the capping layer 202 can be selectively deposited over the sidewalls 112 of the plurality of optical device structures 102 and the upper surface 103 of the substrate 104. In another embodiment, which can be combined with other embodiments described herein, the coating layer 116 and the capping layer 202 disposed on the top surface 114 of the plurality of optical device structures 102 can be etched.

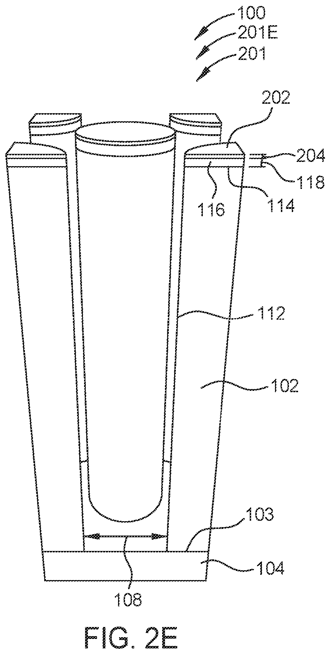

As shown in Figure 2E, the fifth configuration 201E of the unit cell 201 has the coating layer 116 disposed on the top surface 114 of each optical device structure 102 of the plurality of optical device structures 102. The capping layer 202 is disposed on the top surface 114 of each optical device structure 102 of the plurality of optical device structures 102. The sidewalls 112 of each optical device structure 102 of the plurality of optical device structures 102 is exposed. The upper surface 103 of the substrate 104 is exposed. In one embodiment, which can be combined with other embodiments described herein, the coating layer 116 and the capping layer 202 can be selectively deposited over the top surface 114 of each optical device structure 102 of the plurality of optical device structures 102. In another embodiment, which can be combined with other embodiments described herein, the coating layer 116 and the capping layer 202 disposed on the sidewalls 112 of plurality of optical device structures 102 and the upper surface 103 of the substrate 104 can be etched.

Each of the configurations 201A-201E of the unit cell 201 may include the coating layer 116 and the capping layer 202 selectively deposited over the sidewalls 112 of plurality of optical device structures 102 and the top surface 114 of the plurality of optical device structures 102. To form the configurations 201A-201E, one or more conformal layers of the coating layer 116 and the capping layer 202 are deposited. One or more additional layers of the coating layer 116 and the capping layer 202 are deposited after patterning the optical device structures 102. The coating layer 116 and the capping layer 202 are then selectively etched to form the configurations 201A-201E.

Figure 3 is a schematic, cross-sectional view of a coating layer 116. The coating layer 116 is disposed on a top surface 114 of an optical device structure 102. The coating layer 116 includes an upper surface 304 and a layer thickness 118. The layer thickness 118 of the coating layer 116 is divided into a range of monolayers 306 measured from the top surface 114 corresponding to 0% of the layer thickness 118 to the upper surface 304 corresponding to 100% of the layer thickness 118. Each monolayer 302 of the range of monolayers 306 can be separately deposited. Each monolayer 302 of the range of monolayers 306 of the coating layer 116 is deposited by one or more of a CVD, FCVD, PVD, ALD, MBE, IBAD, epitaxy, SoG, IBD, or SoC processes.

Although, only 6 monolayers 302 are shown in Figure 3, the range of monolayers 306 can include between about 1 and about 100 monolayers 302. In one embodiment, which can be combined with other embodiments described herein, the range of monolayers 306 can include between about 2 and about 8 monolayers 302. In one embodiment, which can be combined with other embodiments described herein, each monolayer 302 is conformal to the optical device structures 102. In another embodiment, which can be combined with other embodiments described herein, the coating layer 116 is non-conformal to the optical device structures.

Each monolayer 302 of the range of monolayers 306 has a composition selected from the group consisting of MoS₂, WS₂, WSe₂, MoSe₂, MoTe₂, TiS₂, ZrS₂, ZrSe₂, HfS₂, PtS₂, SnS₂, or combinations thereof. In one embodiment, which can be combined with other embodiments described herein, the composition of each monolayer 302 of the range of monolayers 306 is the same material. In another embodiment, which can be combined with other embodiments described herein, adjacent monolayers 302 of the range of monolayers 306 alternate between a first composition and a second composition. The first composition and the second composition are different from each other. The first composition and the second composition are deposited sequentially throughout the layer thickness 118 of the coating layer 116 such that the first composition and the second composition are alternated in the range of monolayers 306. The monolayers 302 are deposited until a predetermined layer thickness 118 is reached. In yet another embodiment, which can be combined with other embodiments described herein, a third composition can be alternated with the first composition and the second composition to form the coating layer 116. The first composition, the second composition, and the third composition are different from each other. The first composition, the second composition, and the third composition are selected from the group consisting of MoS₂, WS₂, WSe₂, MoSe₂, MoTe₂, TiS₂, ZrS₂, ZrSe₂, HfS₂, PtS₂, SnS₂, or combinations thereof.

The range of monolayers 306 includes multiple high indirect band gaps. To improve the performance of the flat optical device 100, materials having compositions with high indirect band gaps are utilized. In one embodiment, which can be combined with other embodiments described herein, the band gaps for the coating layer 116 are between about 0.3 ev and about 2.3 eV. The band gaps of the optical device structures 102 are less than the band gaps of the coating layer 116. The coating layer 116 has a high indirect band gap, thus reducing the critical dimensions 106 and thickness of the flat optical device 100. This allows for direct integration with a small pitch & thin CNOS (Si) device. The reduced thickness causes the coating layer 116 to have limited surface roughness scattering, making the coating layer 116 less prone to line edge roughness and line width roughness, thus enhancing contrast during etching.

The range of monolayers 306 also includes a higher mobility than the mobility of the plurality of optical device structures 102. The higher mobility of the coating layer 116 increases the performance of the flat optical device 100. As mobility does not degrade at higher electric fields, the flat optical device 100 is operable to detect multiple colors for improved performance of the flat optical device 100. Additionally, the mobility of the coating layer 116 allows for advanced node intraconnection (e.g., complementary metal-oxide-semiconductor (CMOS) intraconnection). The mobility for the WSe₂ monolayer is about 250 cm²/Vs. The mobility for the MoS₂ monolayer is between about 30 cm²/Vs and about 50 cm²/Vs. The mobility of the WS₂ monolayer is between about 150 cm²/Vs and about 200 cm²/Vs.

The range of monolayers 306, having the composition as described above, allows the plurality of optical device structures 102 to remain transparent while still capable of guiding a light beam 110 (shown in Figure 1B) with low light losses at broadband imaging wavelengths. The range of monolayers 306 is operable to absorb and refract the light beam 110 (shown in Figure 1B). As such, the flat optical device 100 may be used for photo detection. The range of monolayers 306 improves the photon emission efficiency of the flat optical device 100. Further, the range of monolayers 306 allow for guidance of light beams at broadband communication wavelengths. As the composition of the coating layer exhibits a high Pockels effect, the flat optical device 100 has improved photo detection capabilities and improved image processing capabilities.

The capping layer 202 may be deposited over the upper surface 304 of the coating layer 116. The capping layer 202 includes at least one of Al₂O₃, TiO, TaO, Si₃N₄, SiO₂, TiN, TiO₂, SiOC, SiC, or combinations thereof. The capping layer 202 can also include low-k, extreme low-k, and ultralow-k dielectric materials such SiCONH, SiCOH, or combinations thereof.

Figure 4 is a flow diagram of a method 400 of forming a flat optical device 100 having one or more unit cells 201. At operation 401, a coating layer 116 is deposited over a plurality of optical device structures 102. In one embodiment, which can be combined with other embodiments described herein, the coating layer 116 including the range of monolayers 306 is selectively deposited on the plurality of optical device structures 102. The coating layer 116 is deposited by one or more of a CVD, FCVD, PVD, ALD, MBE, IBAD, epitaxy, SoG, IBD, or SoC processes. In another embodiment, which can be combined with other embodiments described herein, the coating layer 116 including the range of monolayers 306 is deposited and then etched. The coating layer 116 can be etched by one of ion-beam etching, reactive ion etching, electron-beam (e-beam) etching, wet etching, or combinations thereof.

At optional operation 402, a capping layer 202 is deposited over the coating layer 116. In one embodiment, which can be combined with other embodiments described herein, the capping layer 202 is selectively deposited on the coating layer 116. The capping layer 202 is deposited by one or more of a CVD, FCVD, PVD, ALD, MBE, IBAD, epitaxy, SoG, IBD, or SoC processes. In another embodiment, which can be combined with other embodiments described herein, the capping layer 202 is deposited and then etched. The capping layer 202 can be etched by one of ion-beam etching, reactive ion etching, electron-beam (e-beam) etching, wet etching, or combinations thereof.

In summation, optical devices with a coating layer including monolayers selected from the group consisting of MoS₂, WS₂, WSe₂, MoSe₂, MoTe₂, TiS₂, ZrS₂, ZrSe₂, HfS₂, PtS₂, SnS₂, or combinations thereof are disclosed herein. The coating layer is disposed over a plurality of optical device structures of the optical device. A range of monolayers forms the coating layer. The monolayers may alternate between the materials to form the coating layer or may be a uniform coating layer of a single material. The coating layer is disposed over each optical device structure of the plurality of optical device structures to improve the bandgaps of the flat optical device, allow the flat optical device to absorb and diffract light with efficient photon emission capabilities.

While the foregoing is directed to examples of the present disclosure, other and further examples of the disclosure may be devised without departing from the basic scope thereof, and the scope thereof is determined by the claims that follow.

## Claims

1. A device, comprising:
a flat optical device (100) operable to focus light incident on the flat optical device, the flat optical device comprising:
a plurality of optical device structures (102) disposed in or on an upper surface (103) of a substrate (104); and **characterised in that**
a coating layer (116) disposed over each optical device structure (102) of the plurality of optical device structures (102), the coating layer (116) comprising:
one or more monolayers (302), each monolayer (302) of the one or more monolayers (302) having a composition selected from the group consisting of molybdenum disulfide (MoS₂), tungsten disulfide (WS₂), tungsten diselenide (WSe₂), molybdenum diselenide (MoSe₂), molybdenum ditelluride (MoTe₂), titanium disulfide (TiS₂), zirconium disulfide (ZrS₂), zirconium diselenide (ZrSe₂), hafnium disulfide (HfS₂), platinum disulfide (PtS₂), tin disulfide (SnS₂), or combinations thereof.

2. The device of claim 1, wherein the plurality of optical device structures (102) has a critical dimension (106) less than 1 micron corresponding to a width or a diameter of a cross section of the plurality of optical device structures (102).

3. The device of claim 1, wherein adjacent monolayers (302) of the one or more monolayers (302) alternate between a first composition, a second composition, and a third composition, the first composition, the second composition, and the third composition are different from each other and are selected from the group consisting of MoS₂, WS₂, WSe₂, MoSe₂, MoTe₂, TiS₂, ZrS₂, ZrSe₂, HfS₂, PtS₂, SnS₂, or combinations thereof.

4. The device of claim 1, wherein the one or more monolayers (302) have an amorphous lattice.

5. The device of claim 1, wherein the coating layer (116) is disposed on the upper surface (103) of the substrate (104), sidewalls (112) of each optical device structure (102), and a top surface (114) of each optical device structure (102).

6. The device of claim 1, wherein the coating layer (116) is disposed on sidewalls (112) of each optical device structure (102) and a top surface (114) of each optical device structure (102), while the upper surface (103) of the substrate (104) remains uncoated.

7. The device of claim 1, wherein the coating layer (116) is disposed on sidewalls (112) of each optical device structure (102), while the upper surface (103) of the substrate (104) and a top surface (114) of each optical device structure (102) remain uncoated.

8. The device of claim 1, wherein the coating layer (116) is disposed on the upper surface (103) of the substrate (104) and sidewalls (112) of each optical device structure (102), while a top surface (114) of each optical device structure (102) remains uncoated.

9. The device of claim 1, wherein the coating layer (116) is disposed on a top surface (114) of each optical device structure (102), while sidewalls (112) of each optical device structure (102) and the upper surface (103) of the substrate (104) remain uncoated.

10. The device of claim 1, wherein the flat optical device (100) is a metasurface.

11. The device of claim 10, wherein the plurality of optical device structures (102) have a critical dimension (106) less than 1 micron.

12. The device of claims 1 or 11, wherein a composition of each monolayer (302) of the one or more monolayers (302) is the same.

13. The device of claims 1 or 11, wherein adjacent monolayers (302) of the one or more monolayers (302) alternate between a first composition and a second composition, the first composition and second composition are different from each other and are selected from the group consisting of MoS₂, WS₂, WSe₂, MoSe₂, MoTe₂, TiS₂, ZrS₂, ZrSe₂, HfS₂, PtS₂, SnS₂, or combinations thereof.

14. The device of claim 10, further comprising:
a camera; and
the flat optical device (100) operable to focus light incident on the flat optical device to the camera.

15. The device of claims 1 or 14, wherein the flat optical device (100) further comprises a capping layer disposed over the coating layer (116), the capping layer including at least one of aluminum oxide (Al₂O₃), titanium oxide (TiO), tantalum oxide (TaO), silicon nitride (Si₃N₄), silicon dioxide (SiO₂), titanium nitride (TiN), titanium dioxide (TiO₂), silicon oxycarbide (SiOC), silicon carbide (SiC), or combinations thereof.

## Patentansprüche

1. Bauelement, umfassend:
ein flaches optisches Bauelement (100) betreibar um auf das flache optische Bauelement auftreffendes Licht zu fokussieren, wobei das flache optische Bauelement umfasst:
eine Vielzahl von optischen Bauelementstrukturen (102), die in oder auf einer oberen Oberfläche (103) eines Substrats (104) angeordnet sind; und **dadurch gekennzeichnet, dass**
eine Beschichtungsschicht (116) über jeder optischen Bauelementstruktur (102) der Vielzahl von optischen Bauelementstrukturen (102) angeordnet ist, wobei die Beschichtungsschicht (116) umfasst:
eine oder mehrere Monoschichten (302), wobei jede Monoschicht (302) der einen oder mehreren Monoschichten (302) eine Zusammensetzung aufweist, die aus der Gruppe ausgewählt ist, die aus Molybdändisulfid (MoS₂), Wolframdisulfid (WS₂), Wolframdiselenid (WSe₂), Molybdändiselenid (MoSe₂), Molybdänditellurid (MoTe₂), Titandisulfid (TiS₂), Zirkoniumdisulfid (ZrS₂), Zirkoniumdiselenid (ZrSe₂), Hafniumdisulfid (HfS₂), Platindisulfid (PtS₂), Zinndisulfid (SnS₂) oder Kombinationen davon.

2. Bauelement nach Anspruch 1, wobei die Vielzahl von optischen Bauelementstrukturen (102) eine kritische Abmessung (106) von weniger als 1 Mikrometer aufweisen, die mit einer Breite oder einem Durchmesser eines Querschnitts der Vielzahl von optischen Bauelementstrukturen (102) korrespondiert.

3. Bauelement nach Anspruch 1, wobei benachbarte Monoschichten (302) der einen oder mehreren Monoschichten (302) zwischen einer ersten Zusammensetzung, einer zweiten Zusammensetzung und einer dritten Zusammensetzung wechseln, wobei sich die erste Zusammensetzung, die zweite Zusammensetzung und die dritte Zusammensetzung voneinander unterscheiden und aus der Gruppe ausgewählt sind, die aus MoS₂, WS₂, WSe₂, MoSe₂, MoTe₂, TiS₂, ZrS₂, ZrSe₂, HfS₂, PtS₂, SnS₂ oder Kombinationen davon ausgewählt sind.

4. Bauelement nach Anspruch 1, wobei die eine oder mehreren Monoschichten (302) ein amorphes Gitter aufweisen.

5. Bauelement nach Anspruch 1, wobei die Beschichtungsschicht (116) auf der Oberseite (103) des Substrats (104), den Seitenwänden (112) jeder optischen Bauelementstruktur (102) und einer Oberseite (114) jeder optischen Bauelementstruktur (102) angeordnet ist.

6. Bauelement nach Anspruch 1, wobei die Beschichtungsschicht (116) auf den Seitenwänden (112) jeder optischen Bauelementstruktur (102) und einer Oberseite (114) jeder optischen Bauelementstruktur (102) angeordnet ist, während die Oberseite (103) des Substrats (104) unbeschichtet bleibt.

7. Bauelement nach Anspruch 1, wobei die Beschichtungsschicht (116) auf den Seitenwänden (112) jeder optischen Bauelementstruktur (102) angeordnet ist, während die Oberseite (103) des Substrats (104) und eine Oberseite (114) jeder optischen Bauelementstruktur (102) unbeschichtet bleiben.

8. Bauelement nach Anspruch 1, wobei die Beschichtungsschicht (116) auf der Oberseite (103) des Substrats (104) und den Seitenwänden (112) jeder optischen Bauelementstruktur (102) angeordnet ist, während eine Oberseite (114) jeder optischen Bauelementstruktur (102) unbeschichtet bleibt.

9. Bauelement nach Anspruch 1, wobei die Beschichtungsschicht (116) auf einer Oberseite (114) jeder optischen Bauelementstruktur (102) angeordnet ist, während die Seitenwände (112) jeder optischen Bauelementstruktur (102) und die Oberseite (103) des Substrats (104) unbeschichtet bleiben.

10. Bauelement nach Anspruch 1, wobei das flache optische Bauelement (100) eine Metaoberfläche ist.

11. Bauelement nach Anspruch 10, wobei die Vielzahl der optischen Bauelementstrukturen (102) eine kritische Abmessung (106) von weniger als 1 Mikrometer aufweisen.

12. Bauelement nach Anspruch 1 oder 11, wobei eine Zusammensetzung jeder Monoschicht (302) der einen oder mehreren Monoschichten (302) gleich ist.

13. Bauelement nach Anspruch 1 oder 11, wobei benachbarte Monoschichten (302) der einen oder mehreren Monoschichten (302) zwischen einer ersten Zusammensetzung und einer zweiten Zusammensetzung wechseln, wobei sich die erste Zusammensetzung und die zweite Zusammensetzung voneinander unterscheiden und aus der Gruppe ausgewählt sind, die aus MoS₂, WS₂, WSe₂, MoSe₂, MoTe₂, TiS₂, ZrS₂, ZrSe₂, HfS₂, PtS₂, SnS₂ oder Kombinationen davon ausgewählt sind.

14. Bauelement nach Anspruch 10, ferner umfassend:
eine Kamera; und
das flache optische Bauelement (100), das so betrieben werden kann, dass sie auf das flache optische Bauelement auftreffendes Licht auf die Kamera fokussiert.

15. Bauelement nach Anspruch 1 oder 14, wobei das flache optische Bauelement (100) ferner eine über der Beschichtungsschicht (116) angeordnete Deckschicht umfasst, wobei die Deckschicht mindestens eines von Folgendem aufweist: Aluminiumoxid (Al₂O₃), Titanoxid (TiO), Tantaloxid (TaO), Siliziumnitrid (Si₃N₄), Siliciumdioxid (SiO₂), Titannitrid (TiN), Titandioxid (TiO₂), Siliciumoxycarbid (SiOC), Siliciumcarbid (SiC) oder Kombinationen davon.

## Revendications

1. Dispositif, comprenant :
un dispositif optique plat (100) pouvant fonctionner pour focaliser de la lumière incidente sur le dispositif optique plat, le dispositif optique plat comprenant :
une pluralité de structures de dispositif optique (102) disposées dans ou sur une surface supérieure (103) d'un substrat (104) ; et **caractérisé en ce que**
une couche de revêtement (116) est disposée sur chaque structure de dispositif optique (102) de la pluralité de structures de dispositif optique (102), la couche de revêtement (116) comprenant :
une ou plusieurs monocouches (302), chaque monocouche (302) de la ou des monocouches (302) ayant une composition choisie dans le groupe constitué de disulfure de molybdène (MoS₂), de disulfure de tungstène (WS₂), de diséléniure de tungstène (WSe₂), de diséléniure de molybdène (MoSe₂), de ditellurure de molybdène (MoTe₂), de disulfure de titane (TiS₂), de disulfure de zirconium (ZrS₂), de diséléniure de zirconium (ZrSe₂), de disulfure d'hafnium (HfS₂), de disulfure de platine (PtS₂), de disulfure d'étain (SnS₂), ou de leurs combinaisons.

2. Dispositif selon la revendication 1, dans lequel les structures de la pluralité de structures de dispositif optique (102) ont une dimension critique (106) inférieure à 1 micron correspondant à une largeur ou à un diamètre d'une section transversale des structures de la pluralité de structures de dispositif optique (102).

3. Dispositif selon la revendication 1, dans lequel des monocouches adjacentes (302) de la ou des monocouches (302) alternent entre une première composition, une deuxième composition et une troisième composition, la première composition, la deuxième composition et la troisième composition sont différentes les unes des autres et sont choisies dans le groupe constitué de MoS₂, de WS₂, de WSe₂, de MoSe₂, de MoTe₂, de TiS₂, de ZrS₂, de ZrSe₂, de HfS₂, de PtS₂, de SnS₂, ou de leurs combinaisons.

4. Dispositif selon la revendication 1, dans lequel la ou les monocouches (302) comportent un réseau amorphe.

5. Dispositif selon la revendication 1, dans lequel la couche de revêtement (116) est disposée sur la surface supérieure (103) du substrat (104), sur des parois latérales (112) de chaque structure de dispositif optique (102), et sur une surface de dessus (114) de chaque structure de dispositif optique (102).

6. Dispositif selon la revendication 1, dans lequel la couche de revêtement (116) est disposée sur des parois latérales (112) de chaque structure de dispositif optique (102) et sur une surface de dessus (114) de chaque structure de dispositif optique (102), tandis que la surface supérieure (103) du substrat (104) demeure non revêtue.

7. Dispositif selon la revendication 1, dans lequel la couche de revêtement (116) est disposée sur des parois latérales (112) de chaque structure de dispositif optique (102), tandis que la surface supérieure (103) du substrat (104) et une surface de dessus (114) de chaque structure de dispositif optique (102) demeurent non revêtues.

8. Dispositif selon la revendication 1, dans lequel la couche de revêtement (116) est disposée sur la surface supérieure (103) du substrat (104) et sur des parois latérales (112) de chaque structure de dispositif optique (102), tandis qu'une surface de dessus (114) de chaque structure de dispositif optique (102) demeure non revêtue.

9. Dispositif selon la revendication 1, dans lequel la couche de revêtement (116) est disposée sur une surface de dessus (114) de chaque structure de dispositif optique (102), tandis que des parois latérales (112) de chaque structure de dispositif optique (102) et la surface supérieure (103) du substrat (104) demeurent non revêtues.

10. Dispositif selon la revendication 1, dans lequel le dispositif optique plat (100) est une métasurface.

11. Dispositif selon la revendication 10, dans lequel les structures de la pluralité de structures de dispositif optique (102) ont une dimension critique (106) inférieure à 1 micron.

12. Dispositif selon la revendication 1 ou la revendication 11, dans lequel une composition de chaque monocouche (302) de la ou des monocouches (302) est la même.

13. Dispositif selon la revendication 1 ou la revendication 11, dans lequel des monocouches adjacentes (302) de la ou des monocouches (302) alternent entre une première composition et une deuxième composition, la première composition et la deuxième composition sont différentes l'une de l'autre et sont choisies dans le groupe constitué de MoS₂, de WS₂, de WSe₂, de MoSe₂, de MoTe₂, de TiS₂, de ZrS₂, de ZrSe₂, de HfS₂, de PtS₂, de SnS₂, ou de leurs combinaisons.

14. Dispositif selon la revendication 10, comprenant en outre :
une caméra ; et
le dispositif optique plat (100) pouvant fonctionner pour focaliser de la lumière incidente sur le dispositif optique plat vers la caméra.

15. Dispositif selon la revendication 1 ou la revendication 14, dans lequel le dispositif optique plat (100) comprend en outre une couche de recouvrement disposée sur la couche de revêtement (116), la couche de recouvrement comprenant au moins l'un d'un oxyde d'aluminium (Al₂O₃), d'un oxyde de titane (TiO), d'un oxyde de tantale (TaO), d'un nitrure de silicium (Si₃N₄), d'un dioxyde de silicium (SiO₂), d'un nitrure de titane (TiN), d'un dioxyde de titane (TiO₂), d'un oxycarbure de silicium (SiOC), d'un carbure de silicium (SiC), ou une de leurs combinaisons.
